# EUROPÄISCHE PATENTSCHRIFT

(11) **EP 2 362 506 B1**
(45) Veröffentlichungstag und Bekanntmachung des Hinweises auf die Patenterteilung: **03.04.2013**
(21) Anmeldenummer: 11154983.8
(22) Anmeldetag: 18.02.2011
(51) Int. Cl.: H02B 13/025

(54) **Lichtbogenbegrenzungsvorrichtung**
Electric arc limiting device
Dispositif de limitation d'arc électrique

(30) Priorität: 23.02.2010 DE 102010008903
(43) Veröffentlichungstag der Anmeldung: 31.08.2011
(73) Patentinhaber: Ormazabal Anlagentechnik GmbH, 47804 Krefeld (DE)
(72) Erfinder: Glasmacher, Peter, 41352, Korschenbroich (DE)
(74) Vertreter: Cohausz & Florack

(56) Entgegenhaltungen:
- DE-A1- 4 142 518
- DE-A1-102004 053 613
- DE-A1-102007 045 486
- US-A- 4 689 716

## Beschreibung

Die Erfindung betrifft eine einteilig ausgebildete Lichtbogenbegrenzungsvorrichtung für eine elektrische Schaltanlage, die ein Schaltanlagengehäuse umfasst.

In einer elektrischen Schaltanlage auftretende Lichtbögen, insbesondere Störlichtbögen, können die Schaltanlage beschädigen bzw. zerstören und Personen in der Nähe der Schaltanlage gefährden. Die Lichtbogenenergie kann im Schaltanlagengehäuse befindliche Gase aufheizen und so für einen Anstieg des Gasdrucks sorgen. Sie korreliert mit der Länge des Lichtbogens. Es wird daher angestrebt, im Falle des Auftretens eines Lichtbogens diesen möglichst kurz zu halten. Dazu können Begrenzungselemente im Gehäuse der Schaltanlage vorgesehen sein. Auf einem Lichtbogenbegrenzungselement kann einen Lichtbogen einen Fußpunkt ausbilden, so dass der Lichtbogen sich nicht weiter verlängert. Ein erheblich verbesserter Personenschutz und ein zusätzlich stark reduziertes Druckmaximum im Schaltanlagengehäuse können die Folge sein.

Aus der DE 10 2004 053 613 A1 ist eine als Kammblech ausgestaltete Lichtbogenbegrenzung für eine elektrische Schaltanlage bekannt. Die Schaltanlage weist ein Schaltanlagengehäuse auf, das über eine Montageöffnung verfügt. Über die Montageöffnung sind in der Schaltanlage angeordnete Betriebsmittel zugänglich. Die Montageöffnung kann mit einer Abdeckung verschlossen werden. Die Abdeckung kann beispielsweise einen Kabelabgangsraum abdecken und das Kammblech kann in diesem Fall Störlichtbögen zwischen den Abgangskabeln begrenzen. Um Montagearbeiten zu erleichtern, ist die Lichtbogenbegrenzung verschwenkbar oder verschiebbar im Schaltanlagengehäuse angeordnet. Für den sicheren Betrieb der Schaltanlage ist eine ordnungsgemäße Positionierung der Lichtbogenbegrenzung erforderlich. Es sind Ankopplungsmittel vorgesehen, die das Schließen der Montageöffnung durch die Abdeckung verhindern, wenn die Lichtbogenbegrenzung nicht ordnungsgemäß positioniert ist. Beispielsweise können die Ankopplungsmittel als ein L-förmiger Hebel ausgestaltet sein, der bei verschwenkter oder verschobener Lichtbogenbegrenzung in die Montageöffnung hinein ragt, so dass das Verschließen der Montageöffnung durch die Abdeckung nicht möglich ist.

Nachteilig bei diesem Stand der Technik ist einerseits, dass die Notwendigkeit, Ankopplungsmittel bereitzustellen, den Konstruktionsaufwand ansteigen lässt, und andererseits, dass sowohl die Lichtbogenbegrenzung als auch die Ankopplungsmittel bei geöffneter Abdeckung im Schaltanlagengehäuse verbleiben, wo sie Montagearbeiten behindern können.

Demgegenüber ist es eine Aufgabe der Erfindung, eine verbesserte Lichtbogenbegrenzungsvorrichtung für eine elektrische Schaltanlage mit einem Schaltanlagengehäuse sowie ein entsprechendes Montageverfahren für eine Lichtbogenbegrenzungsvorrichtung bereitzustellen.

Erfindungsgemäß wird die obige Aufgabe bei einer Lichtbogenbegrenzungsvorrichtung der eingangs genannten Art dadurch gelöst, dass die Lichtbogenbegrenzungseinrichtung umfasst:
eine Abdeckung, die an dem Schaltanlagengehäuse befestigbar ist, wobei die Abdeckung einen im Schaltanlagengehäuse ausgebildeten Kabelanschlussraum abdeckt, wenn die Abdeckung an dem Schaltanlagengehäuse befestigt ist, zumindest zwei elektrisch leitfähige Begrenzungselemente zur Anordnung zwischen in dem Schaltanlagengehäuse vorgesehenen spannungsführenden Komponenten dreier unterschiedlicher Phasen, wobei die spannungsführenden Komponenten als im Kabelanschlussraum angeordnete Kabelanschlüsse ausgebildet sind und wobei die Begrenzungselemente derart mit der Abdeckung verbunden sind, dass gemeinsam mit dem Entfernen der Abdeckung vom Schaltanlagengehäuse die Begrenzungselemente dem Schaltanlagengehäuse vollständig entnehmbar sind, und wobei die Begrenzungselemente geerdet sind und die Kabelanschlüsse voneinander trennen, wenn die Abdeckung an dem Schaltanlagengehäuse befestigt ist.

Weiterhin gelöst wird die Aufgabe durch ein Verfahren, dass das Befestigen einer zu einer einteilig ausgebildeten Lichtbogenbegrenzungsvorrichtung gehörenden Abdeckung an einem Schaltanlagengehäuse einer elektrischen Schaltanlage, so dass die Abdeckung einen im Schaltanlagengehäuse ausgebildeten Kabelanschlussraum abdeckt, wobei die Lichtbogenbegrenzungsvorrichtung zumindest zwei elektrisch leitfähige Begrenzungselemente zur Anordnung zwischen in dem Schaltanlagengehäuse vorgesehenen spannungsführenden Komponenten dreier unterschiedlicher Phasen umfasst, wobei die spannungsführenden Komponenten als im Kabelanschlussraum angeordnete Kabelanschlüsse ausgebildet sind und wobei die Begrenzungselemente derart mit der Abdeckung verbunden sind, dass gemeinsam mit dem Entfernen der Abdeckung vom Schaltanlagengehäuse die Begrenzungselemente dem Schaltanlagengehäuse vollständig entnehmbar sind, und wobei die Begrenzungselemente geerdet sind und die Kabelanschlüsse voneinander trennen, wenn die Abdeckung an dem Schaltanlagengehäuse befestigt ist, umfasst.

Die Erfindung betrifft weiterhin eine Schaltanlage mit einem Schaltanlagengehäuse und einer erfindungsgemäßen Lichtbogenbegrenzungsvorrichtung, wobei die Abdeckung der Lichtbogenbegrenzungsvorrichtung am Schaltanlagengehäuse befestigt ist.

Das Begrenzungselement kann den Abstand des Lichtbogenquellpunkts gegen Erdpotential reduzieren. Dadurch, dass das Begrenzungselement geerdet ist, wenn die Abdeckung an dem Schaltanlagengehäuse befestigt ist, kann es beim Betrieb der Schaltanlage beim Auftreten eines Lichtbogens mit einem Fußpunkt auf dem Begrenzungselement nur zu einem Erdschluss kommen. In der Folge können der im Schaltanlagengehäuse im Lichtbogenfall auftretende Druck reduziert werden, Schäden an der Schaltanlage vermindert und die Personensicherheit erhöht werden.

Durch die Verbindung von Abdeckung und Begrenzungselement, derart, dass gemeinsam mit dem Entfernen der Abdeckung vom Schaltanlagengehäuse das Begrenzungselement dem Schaltanlagengehäuse vollständig entnehmbar ist, kann erreicht werden, dass das Entfernen der Abdeckung vom Schaltanlagengehäuse automatisch die vollständige Entnahme des Begrenzungselements aus dem Schaltanlagengehäuse zur Folge hat. Das Begrenzungselement kann dann bei Montagearbeiten im Schaltanlagengehäuse nicht mehr hinderlich sein.

Die gewählte Verbindungsart von Abdeckung und Begrenzungselement kann im Umkehrschluss auch bedeuten, dass zum Befestigen der Abdeckung der Lichtbogenbegrenzungsvorrichtung am Schaltanlagengehäuse das Begrenzungselement automatisch in das Schaltanlagengehäuse eingebracht werden muss. Anders ausgedrückt kann die Verbindung des Begrenzungselements mit der Abdeckung derart, dass gemeinsam mit dem Entfernen der Abdeckung vom Schaltanlagengehäuse das Begrenzungselement dem Schaltanlagengehäuse vollständig entnehmbar ist, dahingehend verstanden werden, dass das Begrenzungselement mit der Abdeckung derart verbunden ist, dass gleichzeitig mit dem Befestigen der Abdeckung der Lichtbogenbegrenzungsvorrichtung am Schaltanlagengehäuse das Begrenzungselement vollständig in das Schaltanlagengehäuse einbringbar ist. Dies bedeutet, dass die gewählte Verbindungsart von Abdeckung und Begrenzungselement dafür sorgen kann, dass die Abdeckung nicht am Schaltanlagengehäuse befestigt werden kann, ohne dass das Begrenzungselements in das Schaltanlagengehäuse eingebracht worden wäre. Ein Vergessen des Einbringens des Begrenzungselements ist nicht möglich. Die Betriebssicherheit der elektrischen Schaltanlage ist daher stets gewährleistet, ohne dass zusätzliche Mittel vorgesehen werden müssten, die bewirken, dass die Abdeckung nicht ohne vorheriges Einbringen des Begrenzungselements in das Schaltanlagengehäuse am Schaltanlagengehäuse befestigt werden kann. Hieraus kann wiederum folgen, dass das Anbringen der Abdeckung am Schaltanlagengehäuse besonders unkompliziert erfolgen kann.

Da die zu der Lichtbogenbegrenzungsvorrichtung gehörende Abdeckung an dem Schaltanlagengehäuse befestigbar ist, kann sie einen Teil der äußeren Schottung der Schaltanlage bilden, d.h. als Außenblende bzw. Verschlussblende dienen. Da sie gleichzeitig mit dem Begrenzungselement verbunden ist, muss kein zusätzliches, das Begrenzungselement tragendes Konstruktionselement vorgesehen sein. So kann mit geringen Kosten die Betriebssicherheit einer elektrischen Schaltanlage erreichbar sein und dabei das Gewicht der Schaltanlage vergleichsweise niedrig gehalten werden.

Bestehende Schaltanlagen können mit einer erfindungsgemäßen Lichtbogenbegrenzungsvorrichtung nachgerüstet werden.

Bei der elektrischen,Schaltanlage kann es sich um jede beliebige Schaltanlage handeln. Zum Beispiel kann es sich um eine Niederspannungsschaltanlage, eine Mittelspannungsschaltanlage, eine Hochspannungsschaltanlage oder eine Höchstspannungsschaltanlage handeln. Insbesondere kann die Schaltanlage eine gasisolierte Schaltanlage sein.

Die zu der Lichtbogenbegrenzungsvorrichtung gehörende Abdeckung kann auf unterschiedlichste Arten am Schaltanlagengehäuse befestigbar sein. Nur beispielsweise sei auf die Möglichkeiten der Befestigung durch eine Steckverbindung, eine Schraubverbindung oder durch eine bloße Verriegelung der Abdeckung am Schaltanlagengehäuse hingewiesen. Auch kann für die Ausgestaltung der Abdeckung eine beliebige geeignete Materialwahl getroffen werden. So kann die Abdeckung etwa aus Metall oder Kunststoff gefertigt sein. Die Abdeckung kann, wenn sie am Schaltanlagengehäuse befestigt ist, eine Außenfläche des Schaltanlagengehäuses vollständig verschließen. Sie kann sie aber auch nur teilweise verschließen bzw. abdecken - beispielsweise kann die Abdeckung bei einer Schaltanlage, die im Inneren des Schaltanlagengehäuses in mehrere funktional unterschiedliche Räume, wie einen Kabelanschlussraum, einen Sammelschienenraum, einen Leistungsschalterraum etc. unterteilt ist, lediglich die Außenfläche von einem dieser Räume abdecken.

Das Begrenzungselement der Lichtbogenbegrenzungsvorrichtung kann aus jedem leitfähigen Material, insbesondere aus Metall, bestehen. Es kann sich aber auch um ein Begrenzungselement handeln, dass aus einem nicht oder nur schlecht leitfähigen Kern mit einem leitfähigen Überzug aufgebaut ist. Das Begrenzungselement kann beispielsweise als Begrenzungswand ausgestaltet sein.

Das Begrenzungselement kann z.B. so an der Innenseite der Abdeckung angeordnet sein, dass es in den vom Schaltanlagengehäuse eingeschlossenen Raum hineinragt. Die Verbindung von Abdeckung und Begrenzungselement kann auf unterschiedliche Weise hergestellt sein. So können Abdeckung und Begrenzungselement zum Beispiel miteinander verschweißt oder verlötet sein. Auch ist eine Schraubverbindung oder ein Verkleben von Abdeckung und Begrenzungselement möglich.

Ist die Abdeckung an dem Schaltanlagengehäuse befestigt, kann die Erdung des Begrenzungselements entweder unmittelbar oder über eine Erdung der Abdeckung gegeben sein.

Entsprechend der Erfindung ist die Lichtbogenbegrenzungsvorrichtung einteilig, z.B. als Einheit bzw. als eine Baugruppe, ausgebildet. So kann erreicht werden, dass Abdeckung und Begrenzungselement nur zusammen und nicht unabhängig voneinander bewegt werden können.

Als ein Sonderfall einer einteiligen Ausbildung der Lichtbogenbegrenzungsvorrichtung kann die Lichtbogenbegrenzungsvorrichtung einstückig ausgebildet sein. Dazu kann die die Abdeckung und das Begrenzungselement umfassende Lichtbogenbegrenzungsvorrichtung beispielsweise in einem Gussverfahren hergestellt werden.

Die Erfindung sieht vor, dass das Begrenzungselement ein Begrenzungselement zur Anordnung zwischen in dem Schaltanlagengehäuse vorgesehenen spannungsführenden Komponenten ist.

Dabei sind die spannungsführenden Komponenten Kabelanschlusselemente. Spannungsführend bedeutet dabei nicht, dass eine Komponente in jedem Betriebszustand der Schaltanlage spannungsführend sein muss. Es reicht aus, wenn ein Zustand existiert, in dem sie spannungsführend sein kann. Da das Begrenzungselement ein Begrenzungselement zur Anordnung zwischen in dem Schaltanlagengehäuse vorgesehenen spannungsführenden Komponenten ist, kann es das Übergreifen eines von einer spannungsführenden Komponente auf einer Seite des Begrenzungselements ausgehenden Lichtbogens auf die spannungsführende Komponente auf der anderen Seite des Begrenzungselements verhindern.

Gemäß einem Ausführungsbeispiel ist das Begrenzungselement derart mit der Abdeckung verbunden, dass gemeinsam mit dem Entfernen der Abdeckung vom Schaltanlagengehäuse das Begrenzungselement dem Schaltanlagengehäuse getrennt von den spannungsführenden Komponenten vollständig entnehmbar ist.

Dazu können die spannungsführenden Komponenten nicht mit der Lichtbogenbegrenzungsvorrichtung, insbesondere weder mit der Abdeckung noch mit dem Begrenzungselement, verbunden sein. Dass das Begrenzungselement derart mit der Abdeckung verbunden ist, dass gemeinsam mit dem Entfernen der Abdeckung vom Schaltanlagengehäuse das Begrenzungselement dem Schaltanlagengehäuse getrennt von den spannungsführenden Komponenten vollständig entnehmbar ist, bedeutet nicht zwangsläufig, dass keinerlei spannungsführende Komponenten mit der Lichtbogenbegrenzungsvorrichtung verbunden sind. Es reicht aus, wenn das Begrenzungselement getrennt von zumindest zwei in dem Schaltanlagengehäuse vorgesehenen spannungsführenden Komponenten, zur Anordnung zwischen denen es vorgesehen ist, dem Schaltanlagengehäuse entnehmbar ist. Ausdrücklich möglich ist jedoch auch, dass, weder wenn die Abdeckung an dem Schaltanlagengehäuse befestigt ist noch wenn sie dies nicht ist, keine spannungsführende Komponente mit der Lichtbogenbegrenzungsvorrichtung verbunden ist. Dies kann insofern vorteilhaft sein, als dass sowohl das Befestigen der Abdeckung an dem Schaltanlagengehäuse und die damit einhergehende Montage des Begrenzungselements im Schaltanlagengehäuse als auch das Entfernen der Abdeckung vom Schaltanlagengehäuse und die damit einhergehende Demontage des Begrenzungselements erfolgen kann, ohne elektrische Verbindungen der spannungsführenden Komponenten herstellen bzw. Anschlüsse lösen zu müssen.

Ist das Begrenzungselement derart mit der Abdeckung verbunden, dass gemeinsam mit dem Entfernen der Abdeckung vom Schaltanlagengehäuse das Begrenzungselement dem Schaltanlagengehäuse getrennt von den spannungsführenden Komponenten vollständig entnehmbar ist, kann dadurch, dass die spannungsführenden Komponenten nicht mitbewegt werde müssen, lediglich ein reduzierter Kraftaufwand beim Befestigen der Abdeckung am Schaltanlagengehäuse bzw. beim Entfernen der Abdeckung von diesem notwendig sein. Im Vergleich zu einer Lichtbogenbegrenzungsvorrichtung, bei der spannungsführende Komponenten mit der Lichtbogenbegrenzungsvorrichtung verbunden sind, kann sich ein reduziertes Gewicht ergeben. Geringere Anforderungen an die Stabilität der Lichtbogenbegrenzungsvorrichtung können die Folge sein. Die Anordnung der Lichtbogenbegrenzungsvorrichtung auf einem Rollwagen oder dergleichen kann dann unnötig sein.

Die erfindungsgemäße Lichtbogenbegrenzungsvorrichtung sich vor, dass die spannungsführenden Komponenten unterschiedlichen Phasen zugeordnet sind. Hier kann die Lichtbogenbegrenzungsvorrichtung und insbesondere das Begrenzungselement verhindern, dass ein Lichtbogen von einer spannungsführenden Komponente einer Phase auf eine spannungsführende Komponente einer anderen Phase übergreift und so z.B. ein zwei- oder dreiphasiger Lichtbogen entsteht. Das Begrenzungselement wirkt also als Phasenseparator wirken.

Entsprechend der Erfindung deckt die Abdeckung der Lichtbogenbegrenzungsvorrichtung einen im Schaltanlagengehäuse ausgebildeten Kabelanschlussbereich ab, wenn die Abdeckung an dem Schaltanlagengehäuse befestigt ist, und die spannungsführenden Komponenten sind im Kabelanschlussbereich angeordnete Kabelanschlüsse.

Da insbesondere in Kabelanschlussräumen häufig Montagearbeiten durchzuführen sind, kann der Einsatz einer erfindungsgemäßen Lichtbogenbegrenzungsvorrichtung in diesem Fall besonders vorteilhaft sein. Aufgrund ihrer vollständigen Entnehmbarkeit aus dem Schaltanlagengehäuse kann sie einen komfortablen Zugriff auf im Kabelanschlussraum angeordnete Komponenten erlauben. Bei den im Kabelanschlussbereich angeordneten Kabelanschlüssen kann es sich um Kabelanschlüsse handeln, die durch die Verwendung isolierender Kabelanschlussstecker phasenweise isoliert sind.

Bei einer beispielhaften Ausführungsform der Erfindung ist die Abdeckung der Lichtbogenbegrenzungsvorrichtung als Steckblende ausgestaltet.

Die Ausgestaltung als Steckblende kann eine besonders einfache und zügige Montage ermöglichen, und so ein ohnehin erleichtertes Befestigen am bzw. Entfernen der Abdeckung vom Schaltanlagengehäuse unterstützen. Die Verwendung der erfindungsgemäßen Lichtbogenbegrenzungsvorrichtung für bestehende Schaltanlagen, deren Gehäuse für die Abdeckung durch eine Steckblende ausgelegt ist, wird ermöglicht. So kann die Möglichkeit zum unkomplizierten Nachrüsten bestehender Schaltanlagen mit erfindungsgemäßen Lichtbogenbegrenzungsvorrichtungen eröffnet werden.

Im Rahmen eines Ausführungsbeispiels sind Verrieglungsmittel zum Verriegeln der an dem Schaltanlagengehäuse befestigten Steckblende vorgesehen. So kann die Abdeckung am Schaltanlagengehäuse gesichert werden. Auch besteht die Möglichkeit, mit den Verrieglungsmitteln in Wirkverbindung stehende Kopplungsmittel am Schaltanlagengehäuse anzuordnen, und den Betreib der elektrischen Schaltanlage nur zu erlauben, wenn die Verrieglungsmittel an die Kopplungsmittel angekoppelt sind, d.h. wenn die Abdeckung am Schaltanlagengehäuse befestigt ist. Die Kopplungsmittel können beispielsweise als elektrischer Kontakt ausgestaltet sein, der nur bei angekoppelten Verrieglungsmitteln geschlossen ist, so dass es detektierbar wird, ob das Schaltanlagengehäuse durch die Abdeckung verschlossen ist oder nicht.

Eine beispielhafte Ausführungsform der Erfindung beinhaltet, dass die Außenkanten des Begrenzungselements allseitig mit Innenflächen der Abdeckung bzw. des Schaltanlagengehäuses abschließen, wenn die Abdeckung an dem Schaltanlagengehäuse befestigt ist.

Beispielsweise kann eine Außenkante des Begrenzungselements mit einer Innenfläche der Abdeckung abschließen und die übrigen Außenkanten des Begrenzungselements können mit Innenflächen des Schaltanlagengehäuses abschließen, wenn die Abdeckung an dem Schaltanlagengehäuse befestigt ist.

Ist die Abdeckung an dem Schaltanlagengehäuse befestigt und damit das Begrenzungselement in das Schaltanlagengehäuse eingebracht, kann auf diese Weise erreicht werden, dass einem auf einer Seite des Begrenzungselements entstehendem Lichtbogen die Möglichkeit entzogen wird, an dem Begrenzungselement vorbei einen Fußpunkt auf einer anderen Seite des Begrenzungselements auszubilden. Die Lichtbogenbegrenzung erfolgt dann besonders wirkungsvoll.

Das Begrenzungselement, die Innenflächen des Schaltanlagengehäuses und die Innenfläche der Abdeckung können einen abgeschlossenen Raum bilden, in dem eine oder mehrere spannungsführende Komponenten eingeschlossen sind. Als Innenflächen des Schaltanlagengehäuses gelten dabei nicht nur Innenflächen einer äußeren Hülle des Schaltanlagengehäuses, sondern beispielsweise auch die Oberflächen innerhalb des Schaltanlagengehäuses fest montierter Trennwände. Die Innenflächen der Schaltanlage und der Abdeckung können'aus leitfähigem Material, z.B. Metall, ausgebildet sein.

Bei einem Ausführungsbeispiel ist das Begrenzungselement frei in dem Schaltanlagengehäuse angeordnet, wenn die Abdeckung an dem Schaltanlagengehäuse befestigt ist.

Es kann beispielsweise vorgesehen sein, dass im Schaltanlagengehäuse keine Führungs- oder Aufnahmemittel für das Begrenzungselement, wie Schienen oder Rastelemente, angeordnet sind, so dass das Begrenzungselement frei im Schaltanlagengehäuse angeordnet ist. Eine bestehende elektrische Schaltanlage kann dann mit einer erfindungsgemäßen Lichtbogenbegrenzungsvorrichtung nachgerüstet werden, ohne dass Führungs- oder Aufnahmemittel im Schaltanlagengehäuse angebracht werden müssten. Die Schaltanlage kann so schon nach kurzer Zeit wieder für den Betrieb zur Verfügung stehen. Das Anbringen von Führungs-oder Aufnahmemittel kann dagegen mit Schwierigkeiten behaftet sein, wenn bei der Schaltanlagenkonstruktion kein Raum für solche Mittel eingeplant wurde. Bei freier Anordnung des Begrenzungselements im Schaltanlagengehäuse kann das Begrenzungselement Teile des Schaltanlagengehäuses berühren oder berührungsfrei im Schaltanlagengehäuse angeordnet sein.

Beispielsweise kann das Begrenzungselement als eine Begrenzungswand ausgestaltet sein und aus zwei Blechen als Begrenzungselementkomponenten bestehen. Die Bleche können gegeneinander versetzt mit der Abdeckung verbunden sein. So kann beispielsweise aus Blechen mit jeweils rechteckigem Querschnitt ein Begrenzungselement mit einem komplexer geformten Querschnitt geschaffen werden, was fertigungstechnisch besonders günstig sein kann. Solche komplexeren Querschnitte können notwendig werden, damit trotz ungünstiger Anordnung von Bauteilen im Schaltanlagengehäuse das Begrenzungselement in das Schaltanlagengehäuse eingebracht werden kann. Selbstverständlich können auch mehrere Begrenzungselemente, die jeweils aus zumindest zwei Begrenzungselementkomponenten bestehen, mit der Abdeckung verbunden sein - z.B. zwei Begrenzungselemente, die spannungsführende Komponenten dreier unterschiedlicher Phasen voneinander trennen, wenn die Abdeckung am Schaltanlagengehäuse befestigt ist.

Im Rahmen eines Ausführungsbeispiels ist die Abdeckung geerdet, wenn sie an dem Schaltanlagengehäuse befestigt ist, und das Begrenzungselement ist leitend mit der Abdeckung verbunden.

Bei diesem Ausführungsbeispiel kann auf eine unmittelbare Erdung des Begrenzungselements verzichtet werden. Der Einsatz der Lichtbogenbegrenzungsvorrichtung in Schaltanlagen, deren Konstruktion, z.B. aufgrund des Verlaufs einer Erdungsschiene im Schaltanlagengehäuse, eine direkte Erdung des Begrenzungselements nicht erlaubt, kann so ermöglicht bzw. vereinfacht werden. Die Erdung der Abdeckung kann etwa, z.B. im Fall einer Steckblende, über Einhängepunkte am geerdeten Schaltanlagengehäuse erfolgen. Sind Verrieglungsmittel zum Verriegeln der an dem Schaltanlagengehäuse befestigten Steckblende vorgesehen, kann die Erdung der Abdeckung und damit des Begrenzungselements auch über die Verrieglungsmittel vorgenommen werden.

Alternativ oder zusätzlich zur Erdung des Begrenzungselements über die Erdung der Abdeckung kann das Begrenzungselement auch direkt geerdet sein, wenn die Abdeckung an dem Schaltanlagengehäuse befestigt ist. Die Erdung kann z.B. über Federkontakte im Schaltanlagengehäuse erfolgen.

Im Folgenden wird die Erfindung anhand von drei Figuren, die ein Ausführungsbeispiel einer erfindungsgemäßen Lichtbogenbegrenzungsvorrichtung zeigen, näher erläutert. Dabei zeigen:
- Fig. 1: ein Ausführungsbeispiel einer erfindungsgemäßen Lichtbogenbegrenzungsvorrichtung in einer Rückansicht,
- Fig. 2: die Lichtbogenbegrenzungsvorrichtung aus Fig. 1 in einer Seitenansicht,
- Fig. 3: die Lichtbogenbegrenzungsvorrichtung aus Fig. 1 in einer perspektivischen Ansicht.

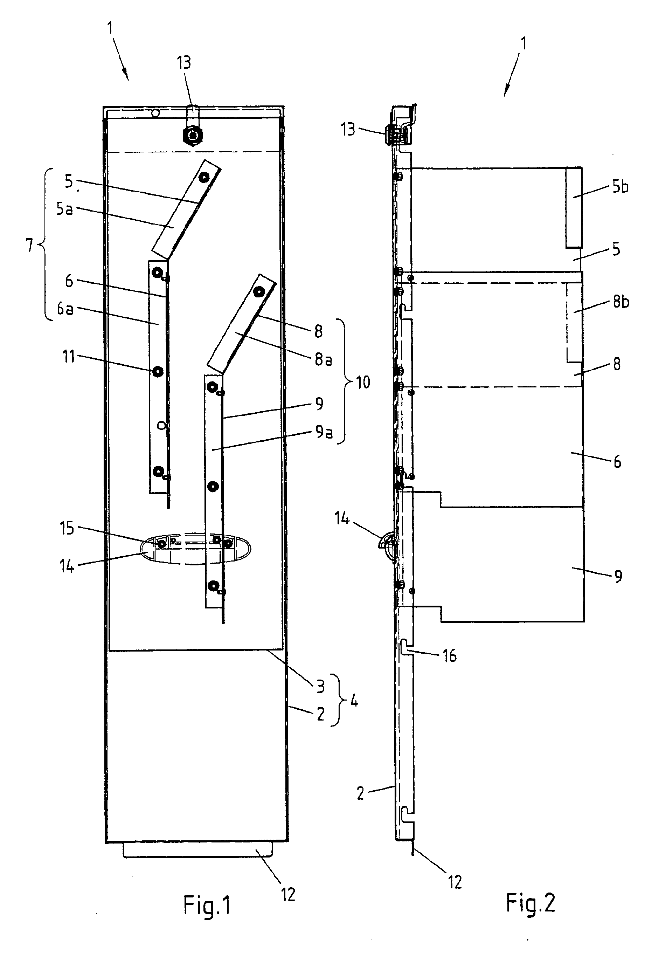

Fig. 1 zeigt ein Ausführungsbeispiel einer erfindungsgemäßen Lichtbogenbegrenzungsvorrichtung 1 in einer Rückansicht.

Die Lichtbogenbegrenzungsvorrichtung 1 umfasst eine als Steckblende 4 ausgestaltete Abdeckung, die an einem Schaltanlagengehäuse einer gasisolierten Mittelspannungsschaltanlage (nicht gezeigt) befestigbar ist. Die Steckblende 4 umfasst ein Stahlblech 2 als Außenblech und ein Stahlblech 3 als Innenblech. Das Innenblech 3 ist an seinem oberen und an seinem unteren Rand mit der Innenseite des Außenblechs 2 verschweißt. Der Mittelteil des Innenblechs 3 ist gegenüber der Innenseite des Außenblechs 2 beabstandet. Die Lichtbogenbegrenzungsvorrichtung umfasst neben der Steckblende 4 weiterhin zwei Begrenzungselemente 7 und 10. Das Begrenzungselement 7 besteht aus zwei Begrenzungselementkomponenten, die von den Stahlblechen 5 und 6 gebildet werden und somit elektrisch leitfähig sind. Das Begrenzungselement 10 besteht aus den Stahlblechen 8 und 9. Die Stahlbleche 5, 6 und 8, 9 weisen Abschnitte 5a, 6a, 8a und 9a auf, die an der Innenseite des Innenblechs 3 der Steckblende 4 anliegen, wo sie über Schrauben und Muttern 11 mit dem Innenblech 3 der Steckblende 4 verbunden sind. Am Außenblech 2 der Steckblende 4 ist ein Vorsprung 12 ausgeprägt. An der Steckblende 4 sind ein Verrieglungsmechanismus 13 und ein Griffelement 14, das über Niete 15 mit dem Außenblech 2 verbunden ist, ausgebildet. Fig. 2 zeigt die Lichtbogenbegrenzungsvorrichtung 1 aus Fig. 1 in einer Seitenansicht. In dieser Ansicht ist erkennbar, dass die Stahlbleche 5 und 8 jeweils mit einem Umschlag 5b bzw. 8b versehen sind, um ihre Steifigkeit zu erhöhen. Weiterhin geht aus Fig. 2 hervor, dass an den Rändern an den Längsseiten des Außenblechs 2 Haken 16 ausgebildet sind. Diese korrespondieren mit an dem Schaltanlagengehäuse der gasisolierten Mittelspannungsschaltanlage, für die die Steckblende 4 bestimmt ist, vorgesehenen Einhängepunkten. Weiterhin ist an dem Schaltanlagengehäuse eine Aufnahme für den Vorsprung 12 des Außenblechs 2 vorgesehen.

Mittels der Haken 16 und des Vorsprungs 12 ist die Steckblende 4 am Schaltanlagengehäuse in einfacher Weise befestigbar. Bei entsprechend ausgelegtem Schaltanlagengehäuse ist sie auch an nicht eigens für die Verwendung der Lichtbogenbegrenzungsvorrichtung 1 konzipierten Schaltanlagen befestigbar, die somit mit der Lichtbogenbegrenzungsvorrichtung 1 nachgerüstet werden können. Mittels des Verrieglungsmechanismus 13 kann die Steckblende 4 am Schaltanlagengehäuse verriegelt und somit an diesem gesichert werden. Es besteht die Möglichkeit, mit dem Verrieglungsmechanismus 13 in Wirkverbindung stehende Kopplungsmittel am Schaltanlagengehäuse anzuordnen, und den Betrieb der gasisolierten Mittelspannungsschaltanlage nur zu erlauben, wenn der Verrieglungsmechanismus 13 an die Kopplungsmittel angekoppelt ist, d.h. wenn die Steckblende 4 am Schaltanlagengehäuse befestigt und gesichert ist.

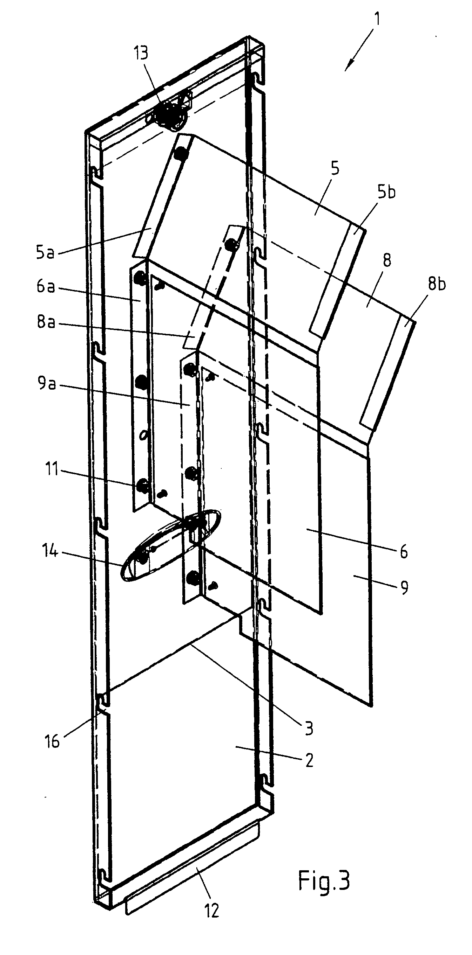

Ergänzend zeigt Fig. 3 Lichtbogenbegrenzungsvorrichtung 1 in einer perspektivischen Ansicht.

Ist die Steckblende 4 am Schaltanlagengehäuse befestigt, deckt sie einen im Inneren des Schaltanlagengehäuses ausgebildeten Kabelanschlussraum ab, in dem Kabelanschlüsse für drei unterschiedlichen Phasen zugeordnete Kabel angeordnet sind, wobei die Kabelanschlüsse durch die Verwendung isolierender Kabelanschlussstecker phasenweise isoliert sind. Die Steckblende 4 bildet dann die äußere Schottung des Kabelanschlussraums. Da sie gleichzeitig mit den Begrenzungselementen 7 und 10 verbunden ist, muss kein zusätzliches, die Begrenzungselemente 7 und 10 tragendes Konstruktionselement vorgesehen sein. Die Steckblende ist über die Verbindung zum Schaltanlagengehäuse mittels des Verrieglungsmechanismus 13 und der Haken 16 geerdet, wenn sie am Schaltanlagengehäuse befestigt ist. Damit sind auch die Begrenzungselemente 7 und 10 geerdet, denn die Stahlbleche 5, 6 und 8, 9 liegen mit ihren Abschnitten 5a, 6a, 8a und 9a am Innenblech 3 an und sind daher leitend mit der Steckblende 4 verbunden. Es ist folglich keine unmittelbare Erdung der Begrenzungselemente 7 und 10 notwendig, auch wenn sie ergänzend oder alternative zur Erdung über die Steckblende 4 z.B. über Federkontakte im Schaltanlagengehäuse erfolgen kann. Der Einsatz der Lichtbogenbegrenzungsvorrichtung 1 in Schaltanlagen, deren Konstruktion, beispielsweise aufgrund des Verlaufs einer Erdungsschiene im Schaltanlagengehäuse, eine direkte Erdung der Begrenzungselemente 7 und 10 nicht erlaubt, kann so ermöglicht bzw. vereinfacht werden.

Aufgrund der Anordnung der Begrenzungselemente 7 und 10 an der Steckblende 4 rechtwinklig zu dieser ragen die Begrenzungselemente 7, 10 in den Kabelanschlussraum des Schaltanlagengehäuses hinein, wenn die Steckblende 4 am Schaltanlagengehäuse befestigt ist. Die Begrenzungselemente 7, 10 sind dann zwischen jeweils zwei Kabelanschlüssen unterschiedlicher Phasen angeordnet. Geht ein Störlichtbogen von einem der Kabelanschlüsse aus, ist über ein angrenzendes Begrenzungselement 7, 10 der Abstand des Lichtbogenquellpunkts gegen Erdpotential reduziert. Durch die Erdung der Begrenzungselemente 7, 10, kann es beim Betrieb der Schaltanlage beim Auftreten eines Lichtbogens mit einem Fußpunkt auf einem Begrenzungselement 7, 10 nur zu einem Erdschluss kommen. In der Folge können der im Schaltanlagengehäuse im Lichtbogenfall auftretende Druck reduziert werden, Schäden an der Schaltanlage vermindert und die Personensicherheit erhöht werden. Das Übergreifen eines von einem Kabelanschluss auf einer Seite eines der Begrenzungselemente 7, 10 ausgehenden Lichtbogens auf einen Kabelanschluss auf der anderen Seite des jeweiligen Begrenzungselements wird verhindert. Ein zwei- oder dreiphasiger Lichtbogen entsteht nicht. Die Begrenzungselemente 7 und 10 wirken also als Phasenseparatoren.

Die Außenkanten der Begrenzungselemente 7, 10 schließen allseitig mit dem Innenblech 3 der Steckblende 4 bzw. mit Innenflächen des Schaltanlagengehäuses ab, wenn die Steckblende 4 am Schaltanlagengehäuse befestigt ist. Als Innenflächen des Schaltanlagengehäuses gelten dabei nicht nur Innenflächen einer äußeren Hülle des Schaltanlagengehäuses, sondern beispielsweise auch die Oberflächen innerhalb des Schaltanlagengehäuses fest montierter Trennwände aus leitfähigem Material. Durch das allseitige Abschließen der Außenkanten der Begrenzungselemente 7, 10 kann verhindert werden, dass ein auf einer Seite eines Begrenzungselements 7,10 entstehender Lichtbogen, an dem Begrenzungselement 7, 10 vorbei einen Fußpunkt auf einer anderen Seite des Begrenzungselements 7, 10 ausbildet, so dass eine besonders wirkungsvolle Lichtbogenbegrenzung erreichbar ist. Die Begrenzungselemente 7 und 10, die Innenflächen des Schaltanlagengehäuses und die Innenfläche der Steckblende 4 können abgeschlossene Räume bilden, in denen jeweils ein Kabelanschluss eingeschlossen ist.

Die Stahlbleche 5, 6, 8 und 9, die die Begrenzungselemente 7 und 10 bilden, sind mit dem Innenblech 3 der Steckblende 4 verschraubt. Die Lichtbogenbegrenzungsvorrichtung 1 ist daher als einheitliche Baugruppe einteilig ausgebildet. Die Steckblende 4 und die Begrenzungselemente 7 und 10 können nur zusammen und nicht unabhängig voneinander bewegt werden. Wird die Steckblende 4 vom Schaltanlagengehäuse der gasisolierten Mittelspannungsanlage, für die die Lichtbogenbegrenzungsvorrichtung 1 bestimmt ist, entfernt, werden gemeinsam mit dem Entfernen der Steckblende 4 vom Schaltanlagengehäuse die Begrenzungselemente 7 und 10 dem Schaltanlagengehäuse vollständig entnommen. Die Begrenzungselemente 7 und 10 können dann bei Montagearbeiten im Schaltanlagengehäuse nicht mehr hinderlich sein. In einem in dem Schaltanlagengehäuse ausgebildeten Kabelanschlussbereich, wie er von der Steckblende 4 abgedeckt wird, wenn diese am Schaltanlagengehäuse befestigt ist, sind häufig Montagearbeiten durchzuführen. Diese Arbeiten werden durch die Lichtbogenbegrenzungsvorrichtung 1 nicht beeinträchtigt, da diese aufgrund ihrer vollständigen Entnehmbarkeit aus dem Schaltanlagengehäuse einen komfortablen Zugriff auf im Kabelanschlussraum angeordnete Komponenten erlaubt.

Durch die Schraubverbindung zwischen Steckblende 4 und den Begrenzungselementen 7 und 10, müssen zum Befestigen der Steckblende 4 am Schaltanlagengehäuse die Begrenzungselementen 7, 10 zwingend in das Schaltanlagengehäuse eingeführt werden. Anders ausgedrückt, sind die Begrenzungselementen 7, 10 mit der Steckblende 4 derart verbunden, dass gleichzeitig mit dem Befestigen der Steckblende 4 am Schaltanlagengehäuse die Begrenzungselementen 7 und 10 vollständig in das Schaltanlagengehäuse einbringbar sind. Die Verbindung der Steckblende 4 mit den Begrenzungselementen 7 und 10 sorgt dafür, dass die Steckblende 4 nicht am Schaltanlagengehäuse befestigt werden kann, ohne die Begrenzungselemente 7, 10 in das Schaltanlagengehäuse einzubringen. Ein Vergessen des Einbringens des Begrenzungselemente 7, 10 ist nicht möglich. Die Betriebssicherheit der Schaltanlage ist daher stets gewährleistet. Zusätzliche Mittel, die bewirken, dass die Steckblende 4 nicht ohne Einbringen der Begrenzungselemente 7, 10 in das Schaltanlagengehäuse betrieben werden kann, müssten nicht vorgesehen werden. Das Anbringen der Steckblende 4 am Schaltanlagengehäuse kann daher unkompliziert erfolgen.

Die Begrenzungselemente 7, 10 sind dem Schaltanlagengehäuse getrennt von den Kabelanschlüssen im Kabelanschlussbereich entnehmbar, weil die Kabelanschlüsse weder mit der Steckblende 4 noch mit den Begrenzungselementen 7, 10 verbunden sind. Entsprechend dem hier diskutierten Ausführungsbeispiel sind nicht nur die Kabelanschlüsse nicht mit der Lichtbogenbegrenzungsvorrichtung 1 verbunden, sondern es sind überhaupt keine spannungsführenden Komponenten mit der Lichtbogenbegrenzungsvorrichtung 1 verbunden. Sowohl das Befestigen der Steckblende 4 an dem Schaltanlagengehäuse und die damit einhergehende Montage der Begrenzungselemente 7, 10 im Schaltanlagengehäuse als auch das Entfernen der Steckblende 4 vom Schaltanlagengehäuse und die damit einhergehende Demontage der Begrenzungselemente 7, 10 können vorgenommen werden, ohne elektrische Verbindungen spannungsführender Komponenten herstellen bzw. Anschlüsse lösen zu müssen. Auch das Nachrüsten bestehender Schaltanlagen mit der Lichtbogenbegrenzungsvorrichtung 1 kann hierdurch erleichtert werden. Da keine spannungsführenden Komponenten mitbewegt werde müssen, ist lediglich ein reduzierter Kraftaufwand beim Befestigen bzw. beim Entfernen der Steckblende 4 notwendig. Die Lichtbogenbegrenzungsvorrichtung 1 muss keine spannungsführenden Komponenten tragen, ihr Gewicht ist daher vergleichsweise gering. Hohe Anforderungen an die Stabilität der Lichtbogenbegrenzungsvorrichtung 1 werden nicht gestellt. Die Anordnung der Lichtbogenbegrenzungsvorrichtung 1 auf einem Rollwagen ist daher unnötig.

Zur Fertigung der Lichtbogenbegrenzungsvorrichtung 1 werden die Abschnitte 5a, 6a, 8a und 9a von der Außenseite des Innenblechs 3 mit dem Innenblech 3 verschraubt, bevor der obere und der untere Rand der Außenseite des Innenblechs 3 mit der Innenseite des Außenblechs 2 verschweißt werden. Dies bietet nicht nur die Möglichkeit, zum erleichterten Nachrüsten einer bestehenden Schaltanlage mit der Lichtbogenbegrenzungsvorrichtung 1, indem das Innenblech 3 mit den montierten Begrenzungselementen 7, 10 mit dem Außenblech 2 einer vorhandene Steckblende verschweißt wird. Ist nach dem Verschweißen der Abstand zwischen Außenblech 2 und Innenblech 3 gering, ist der Zugriff auf die Schrauben, die das Innenblech 3 und die Begrenzungselemente 7, 10 verbinden, nicht mehr möglich. Sie können nicht vom Innenblech 3 gelöst werden. Die Steckblende 4 kann dann nicht mit demontierten Begrenzungselemente 7, 10 am Schaltanlagengehäuse befestigt werden.

Gemäß dem erläuterten Ausführungsbeispiel sind die Begrenzungselemente 7, 10 frei in dem Schaltanlagengehäuse angeordnet ist, wenn die Steckblende 4 an dem Schaltanlagengehäuse befestigt ist. Es sind keine Führungs-oder Aufnahmemittel für die Begrenzungselemente 7 und 10, wie Schienen oder Rastelemente, im Schaltanlagengehäuse angeordnet. Eine bestehende elektrische Schaltanlage kann daher mit der Lichtbogenbegrenzungsvorrichtung 1 nachgerüstet werden, ohne dass solche Führungs- oder Aufnahmemittel im Schaltanlagengehäuse angebracht werden müssten. Die Schaltanlage kann so schon nach kurzer Zeit wieder für den Betrieb zur Verfügung stehen. Das Anbringen von Führungs-oder Aufnahmemittel kann dagegen mit Schwierigkeiten behaftet sein, wenn bei der Schaltanlagenkonstruktion kein Raum für die Mittel eingeplant wurde.

Der Aufbau der Begrenzungselemente 7, 10 aus jeweils zwei jeweils gegeneinander versetzten Stahlblechen 5 und 6 bzw. 8 und 9 als Begrenzungselementkomponenten erlaubt aus den Blechen 5 und 6 bzw. 8 und 9, die jeweils einen rechteckigen Querschnitt aufweisen, Begrenzungselemente 7, 10 mit komplexer geformten Querschnitten zu schaffen. So kann die Begrenzungselementgeometrie in fertigungstechnisch günstiger Weise an die Anordnung von Bauteilen im Schaltanlagengehäuse angepasst werden. Auch solche Schaltanlagen können daher mit der Lichtbogenbegrenzungsvorrichtung 1 nachgerüstet werden.

## Patentansprüche

1. Einteilig ausgebildete Lichtbogenbegrenzungsvorrichtung (1) für eine elektrische Schaltanlage, die ein Schaltanlagengehäuse umfasst, wobei die Lichtbogenbegrenzungseinrichtung (1) umfasst:
- eine Abdeckung (4), die an dem Schaltanlagengehäuse befestigbar ist, wobei die Abdeckung (4) einen im Schaltanlagengehäuse ausgebildeten Kabelanschlussraum abdeckt, wenn die Abdeckung (4) an dem Schaltanlagengehäuse befestigt ist,
- zumindest zwei elektrisch leitfähige Begrenzungselemente (7; 10) zur Anordnung zwischen in dem Schaltanlagengehäuse vorgesehenen spannungsführenden Komponenten dreier unterschiedlicher Phasen, wobei die spannungsführenden Komponenten als im Kabelanschlussraum angeordnete Kabelanschlüsse ausgebildet sind und wobei die Begrenzungselemente (7; 10) derart mit der Abdeckung (4) verbunden sind, dass gemeinsam mit dem Entfernen der Abdeckung (4) vom Schaltanlagengehäuse die Begrenzungselemente (7; 10) dem Schaltanlagengehäuse vollständig entnehmbar sind, und wobei die Begrenzungselemente (7; 10) geerdet sind und die Kabelanschlüsse voneinander trennen, wenn die Abdeckung (4) an dem Schaltanlagengehäuse befestigt ist.

2. Lichtbogenbegrenzungsvorrichtung (1) nach Anspruch 1, **dadurch gekennzeichnet, dass** die Begrenzungselemente (7; 10) derart mit der Abdeckung (4) verbunden sind, dass gemeinsam mit dem Entfernen der Abdeckung (4) vom Schaltanlagengehäuse die Begrenzungselemente (7; 10) dem Schaltanlagengehäuse getrennt von den spannungsführenden Komponenten vollständig entnehmbar sind.

3. Lichtbogenbegrenzungsvorrichtung (1) nach einem der vorherigen Ansprüche, **dadurch gekennzeichnet, dass** die Abdeckung als Steckblende (4) ausgestaltet ist.

4. Lichtbogenbegrenzungsvorrichtung (1) nach Anspruch 3, **dadurch gekennzeichnet, dass** Verrieglungsmittel (13) zum Verriegeln der an dem Schaltanlagengehäuse befestigten Steckblende (4) vorgesehen sind.

5. Lichtbogenbegrenzungsvorrichtung (1) nach einem der vorherigen Ansprüche, **dadurch gekennzeichnet, dass** die Außenkanten der Begrenzungselemente (7; 10) allseitig mit Innenflächen der Abdeckung (4) bzw. des Schaltanlagengehäuses abschließen, wenn die Abdeckung (4) an dem Schaltanlagengehäuse befestigt ist.

6. Lichtbogenbegrenzungsvorrichtung (1) nach einem der vorherigen Ansprüche, **dadurch gekennzeichnet, dass** die Begrenzungselemente (7; 10) frei in dem Schaltanlagengehäuse angeordnet sind, wenn die Abdeckung (4) an dem Schaltanlagengehäuse befestigt ist.

7. Lichtbogenbegrenzungsvorrichtung (1) nach einem der vorherigen Ansprüche, **dadurch gekennzeichnet, dass** die Begrenzungselemente (7; 10) jeweils zumindest zwei Begrenzungselementkomponenten (5, 6; 7, 8) umfassen.

8. Lichtbogenbegrenzungsvorrichtung (1) nach einem der vorherigen Ansprüche, **dadurch gekennzeichnet, dass** die Abdeckung (4) geerdet ist, wenn sie an dem Schaltanlagengehäuse befestigt ist, und die Begrenzungselemente (7; 10) leitend mit der Abdeckung (4) verbunden sind.

9. Elektrische Schaltanlage mit einem Schaltanlagengehäuse und einer Lichtbogenbegrenzungsvorrichtung (1) nach einem der vorherigen Ansprüche, wobei die Abdeckung (4) der Lichtbogenbegrenzungsvorrichtung (1) am Schaltanlagengehäuse befestigt ist.

10. Verfahren umfassend:
- Befestigen einer zu einer einteilig ausgebildeten Lichtbogenbegrenzungsvorrichtung (1) gehörenden Abdeckung (4) an einem Schaltanlagengehäuse einer elektrischen Schaltanlage, so dass die Abdeckung (4) einen im Schaltanlagengehäuse ausgebildeten Kabelanschlussraum abdeckt, wobei die Lichtbogenbegrenzungsvorrichtung (1) zumindest zwei elektrisch leitfähige Begrenzungselemente (7; 10) zur Anordnung zwischen in dem Schaltanlagengehäuse vorgesehenen spannungsführenden Komponenten dreier unterschiedlicher Phasen umfasst, wobei die spannungsführenden Komponenten als im Kabelanschlussraum angeordnete Kabelanschlüsse ausgebildet sind und wobei die Begrenzungselemente (7; 10) derart mit der Abdeckung (4) verbunden sind, dass gemeinsam mit dem Entfernen der Abdeckung (4) vom Schaltanlagengehäuse die Begrenzungselemente (7; 10) dem Schaltanlagengehäuse vollständig entnehmbar sind, und wobei die Begrenzungselemente (7; 10) geerdet sind und die Kabelanschlüsse voneinander trennen, wenn die Abdeckung (4) an dem Schaltanlagengehäuse befestigt ist.

## Claims

1. An integrally constructed arc-limiting device (1) for an electric switchgear, which comprises a switchgear housing, wherein the arc limiting device (1) comprises:
- a cover (4), which can be fastened on the switchgear housing, wherein the cover (4) covers a cable connection space constructed in the switchgear housing when the cover (4) is fastened on the switchgear housing,
- at least two electrically conductive limiting elements (7; 10) for arrangement between live components of three different phases, which are provided in the switchgear housing, wherein the live components are constructed as cable connections arranged in the cable connection space and wherein the limiting elements (7; 10) are connected to the cover (4) in such a manner that together with the removal of the cover (4) from the switchgear housing, the limiting elements (7; 10) can be removed completely from the switchgear housing, and wherein the limiting elements (7; 10) are earthed and separate the cable connections from one another when the cover (4) is fastened on the switchgear housing.

2. The arc limiting device (1) according to Claim 1, **characterised in that** the limiting elements (7; 10) are connected to the cover (4) in such a manner that together with the removal of the cover (4) from the switchgear housing, the limiting elements (7; 10) can be removed completely from the switchgear housing separately from the live components.

3. The arc limiting device (1) according to one of the preceding claims, **characterised in that** the cover is configured as a plug plate (4).

4. The arc limiting device (1) according to Claim 3, **characterised in that** locking means (13) are provided for locking the plug plate (4) fastened on the switchgear housing.

5. The arc limiting device (1) according to one of the preceding claims, **characterised in that** the external edges of the limiting elements (7; 10) terminate on all sides with inner surfaces of the cover (4) or of the switchgear housing when the cover (4) is fastened on the switchgear housing.

6. The arc limiting device (1) according to one of the preceding claims, **characterised in that** the limiting elements (7; 10) are freely arranged in the switchgear housing when the cover (4) is fastened on the switchgear housing.

7. The arc limiting device (1) according to one of the preceding claims, **characterised in that** the limiting elements (7; 10) comprise at least two limiting element components (5, 6; 7, 8) in each case.

8. The arc limiting device (1) according to one of the preceding claims, **characterised in that** the cover (4) is earthed when it is fastened on the switchgear housing and the limiting elements (7; 10) are connected in a conductive manner to the cover (4).

9. An electric switchgear with a switchgear housing and an arc limiting device (1) according to one of the preceding claims, wherein the cover (4) of the arc limiting device (1) is fastened on the switchgear housing.

10. A method comprising:
- the fastening of a cover (4), which belongs to an integrally constructed arc limiting device (1), on a switchgear housing of an electric switchgear, so that the cover (4) covers a cable connection space constructed in the switchgear housing, wherein the arc limiting device (1) comprises at least two electrically conductive limiting elements (7; 10) for arrangement between live components of three different phases, which are provided in the switchgear housing, wherein the live components are constructed as cable connections arranged in the cable connection space and wherein the limiting elements (7; 10) are connected to the cover (4) in such a manner that together with the removal of the cover (4) from the switchgear housing, the limiting elements (7; 10) can be removed completely from the switchgear housing, and wherein the limiting elements (7; 10) are earthed and separate the cable connections from one another when the cover (4) is fastened on the switchgear housing.

## Revendications

1. Dispositif de limitation d'arc réalisé en une seule pièce (1) pour une installation de distribution électrique, qui comprend un boîtier d'installation de distribution, le dispositif de limitation d'arc (1) comprenant :
- un couvercle (4), qui peut être fixé sur le boîtier d'installation de distribution, le couvercle (4) recouvrant un espace de raccordement de câble formé dans le boîtier d'installation de distribution lorsque le couvercle (4) est fixé au boîtier d'installation de distribution,
- au moins deux éléments de limitation électro-conducteurs (7 ; 10) à disposer entre des composants sous tension prévus dans le boîtier d'installation de distribution de trois phases différentes, les composants sous tension étant réalisés en tant que raccords de câble disposés dans l'espace de raccordement de câble et les éléments de limitation (7 ; 10) étant reliés au couvercle (4) de manière à ce que conjointement avec l'enlèvement du couvercle (4) du boîtier d'installation de distribution, les éléments de limitation (7 ; 10) peuvent être complètement retirés du boîtier d'installation de distribution, et les éléments de limitation (7 ; 10) étant mis à la terre et séparant les raccords de câbles les uns des autres lorsque le couvercle (4) est fixé sur le boîtier d'installation de distribution.

2. Dispositif de limitation d'arc (1) selon la revendication 1, **caractérisé en ce que** les éléments de limitation (7 ; 10) sont reliés au couvercle (4) de manière à ce que conjointement avec l'enlèvement du couvercle (4) du boîtier d'installation de distribution, les éléments de limitation (7 ; 10) peuvent être complètement retirés du boîtier d'installation de distribution de manière séparée des composants sous tension.

3. Dispositif de limitation d'arc (1) selon l'une des revendications précédentes, **caractérisé en ce que** le couvercle est réalisé en tant qu'obturateur enfichable (4).

4. Dispositif de limitation d'arc (1) selon la revendication 3, **caractérisé en ce que** des moyens de verrouillage (13) pour verrouiller l'obturateur enfichable (4) fixé sur le boîtier d'installation de distribution sont prévus.

5. Dispositif de limitation d'arc (1) selon l'une des revendications précédentes, **caractérisé en ce que** les arêtes extérieures des éléments de limitation (7 ; 10) se terminent de tous les côtés par des surfaces internes du couvercle (4) et/ou du boîtier d'installation de distribution lorsque le couvercle (4) est fixé sur le boîtier d'installation de distribution.

6. Dispositif de limitation d'arc (1) selon l'une des revendications précédentes, **caractérisé en ce que** les éléments de limitation (7 ; 10) sont librement disposés dans le boîtier d'installation de distribution lorsque le couvercle (4) est fixé sur le boîtier d'installation de distribution.

7. Dispositif de limitation d'arc (1) selon l'une des revendications précédentes, **caractérisé en ce que** les éléments de limitation (7 ; 10) comprennent respectivement au moins deux composants d'éléments de limitation (5, 6 ; 7, 8).

8. Dispositif de limitation d'arc (1) selon l'une des revendications précédentes, **caractérisé en ce que** le couvercle (4) est mis à la terre lorsqu'il est fixé sur le boîtier d'installation de distribution, et **en ce que** les éléments de limitation (7 ; 10) sont reliés de manière conductrice au couvercle (4).

9. Installation de distribution électrique avec un boîtier d'installation de distribution et un dispositif de limitation d'arc (1) selon l'une des revendications précédentes, le couvercle (4) du dispositif de limitation d'arc (1) étant fixé sur le boîtier d'installation de distribution.

10. Procédé comprenant :
- fixation d'un couvercle (4) appartenant à un dispositif de limitation d'arc (1) réalisé d'une seule pièce sur un boîtier d'installation de distribution d'une installation de distribution électrique, de sorte que le couvercle (4) recouvre un espace de raccordement de câble formé dans le boîtier d'installation de distribution, le dispositif de limitation d'arc (1) comprenant au moins deux éléments de limitation (7 ; 10) électro-conducteurs pour la disposition entre des composants sous tension prévus dans le boîtier d'installation de distribution de trois phases différentes, les composants sous tension étant réalisés en tant que raccords de câble disposés dans l'espace de raccordement de câble et les éléments de limitation (7 ; 10) étant reliés au couvercle (4) de manière à ce que conjointement avec l'enlèvement du couvercle (4) du boîtier d'installation de distribution, les éléments de limitation (7 ; 10) peuvent être complètement retirés du boîtier d'installation de distribution, et les éléments de limitation (7 ; 10) étant mis à la terre et séparant les raccords de câble les uns des autres lorsque le couvercle (4) est fixé sur le boîtier d'installation de distribution.
